# EUROPEAN PATENT APPLICATION

(11) **EP 4 730 256 A1**
(43) Date of publication of application: **22.04.2026**
(21) Application number: 24831589.7
(22) Date of filing: 05.06.2024
(51) Int. Cl.: G06T 7/00

(54) **IMAGE PROCESSING DEVICE, IMAGE PROCESSING METHOD, AND PROGRAM**

(30) Priority: 28.06.2023 JP 2023106062
(71) Applicant: HONDA MOTOR CO., LTD., Tokyo 105-8404 (JP); Toho University, Tokyo 143-8540 (JP)
(72) Inventor: KOSHIZEN Takamasa, Wako-shi, Saitama 351-0193 (JP)
(74) Representative: Kiwit, Benedikt
(86) International application number: PCT/JP2024/020474
(87) International publication number: WO 2025/004719

(57) **Abstract**

Provided is an image processing device including: a detection unit that detects another vehicle present in an image captured by an image sensor mounted in a host vehicle; and a correction unit that corrects a vanishing point of the image, wherein the correction unit corrects the vanishing point on the basis of a result of comparison between a first width of the detected other vehicle and a second width of the other vehicle estimated using the vanishing point.

## Description

### TECHNICAL FIELD

The present invention relates to an image processing device, an image processing method, and a program.

### BACKGROUND ART

Since the past, a technique of extracting a vanishing point from an image captured by a camera mounted in a vehicle has been known. For example, Patent Document 1 discloses a technique of calculating motion vectors between a plurality of images captured by a camera and obtaining vanishing point coordinates within the images using the calculated motion vectors.

### Citation List

### Patent Document

Patent Document 1: Japanese Unexamined Patent Application, First Publication No. 2012-123751

### SUMMARY OF INVENTION

### Technical Problem

The technique disclosed in Patent Document 1 involves calculating a motion vector for each pixel from a plurality of images captured by a camera using a block matching method, a gradient method, or the like. However, such a technique may require significant calculation costs and battery consumption in order to improve the accuracy of the vanishing point.

The present invention was contrived in view of such circumstances, and one object thereof is to provide an image processing device, an image processing method, and a program that make it possible to obtain the vanishing point with a high degree of accuracy while keeping calculation costs and battery consumption low.

### Solution to Problem

The following configurations are adopted in an image processing device, an image processing method, and a program according to this invention.
(1) According to an aspect of this invention, there is provided an image processing device including: a detection unit that detects another vehicle present in an image captured by an image sensor mounted in a host vehicle; and a correction unit that corrects a vanishing point of the image, wherein the correction unit corrects the vanishing point on the basis of a result of comparison between a first width of the detected other vehicle and a second width of the other vehicle estimated using the vanishing point.
(2) In the aspect of the above (1), in a case where the first width of the other vehicle traveling in either a leftward or rightward direction relative to the host vehicle is smaller than the second width, the correction unit corrects the vanishing point in the direction.
(3) In the aspect of the above (1), in a case where the first width of the other vehicle traveling in either a leftward or rightward direction relative to the host vehicle is larger than the second width, the correction unit corrects the vanishing point in a direction opposite to the direction.
(4) In the aspect of the above (2) or (3), the correction unit performs the correction in a case where a distance between the host vehicle and the same other vehicle detected in a time series is decreasing.
(5) In the aspect of the above (2) or (3), the correction unit performs the correction in a case where a distance between the host vehicle and the other vehicle is equal to or less than a threshold.
(6) According to another aspect of this invention, there is provided an image processing method including causing a computer to: detect another vehicle present in an image captured by an image sensor mounted in a host vehicle; and correct a vanishing point of the image, wherein the correction involves correcting the vanishing point on the basis of a result of comparison between a first width of the detected other vehicle and a second width of the other vehicle estimated using the vanishing point.
(7) According to another aspect of this invention, there is provided a program causing a computer to: detect another vehicle present in an image captured by an image sensor mounted in a host vehicle; and correct a vanishing point of the image, wherein the correction involves correcting the vanishing point on the basis of a result of comparison between a first width of the detected other vehicle and a second width of the other vehicle estimated using the vanishing point.

### Advantageous Effects of Invention

According to (1) to (7), it is possible to obtain a vanishing point with a high degree of accuracy while keeping calculation costs and battery consumption low.

### BRIEF DESCRIPTION OF DRAWINGS

[FIG. 1] A diagram illustrating an example of the usage environment of a terminal device 100 mounted in a host vehicle M.
[FIG. 2] A diagram illustrating an example of a configuration of a terminal device 100.
[FIG. 3] A diagram illustrating an example of a situation in which a distance estimation unit 120 estimates a distance between the host vehicle M and another vehicle M1.
[FIG. 4] A diagram illustrating a method by which the distance estimation unit 120 estimates a longitudinal distance between the host vehicle M and the other vehicle M1.
[FIG. 5] A diagram illustrating a method by which the distance estimation unit 120 estimates a lateral distance of the other vehicle M1.
[FIG. 6] A diagram illustrating an example of a bird's-eye view and a camera image displayed on a display unit 20.
[FIG. 7] A diagram illustrating another example of the bird's-eye view and camera image which are displayed on the display unit 20.
[FIG. 8] A diagram illustrating a method of determining the vertical position of a vanishing point V by a vanishing point correction unit 140.
[FIG. 9] A diagram illustrating an example of a situation in which the vanishing point correction unit 140 corrects the horizontal position of the vanishing point V.
[FIG. 10] A diagram illustrating a method of correcting the horizontal position of the vanishing point V by the vanishing point correction unit 140.
[FIG. 11] Another diagram illustrating the method of correcting the horizontal position of the vanishing point V by the vanishing point correction unit 140.
[FIG. 12] A flowchart illustrating an example of a flow of processing executed by a terminal device 100.

### DESCRIPTION OF EMBODIMENTS

Hereinafter, an embodiment of an image processing device, an image processing method, and a program of the present invention will be described with reference to the accompanying drawings. In the present embodiment, the image processing device is, for example, a terminal device 100 such as a smartphone having a camera (image sensor) and a display (display unit). However, the present invention is not limited to such a configuration, and the image processing device is only required to be at least a computer device having an arithmetic operation function excluding the camera and display from the configuration of the terminal device 100 to be described later. In that case, the functions of the present invention are realized by the camera, the display, and the image processing device in cooperation.

### [Configuration]

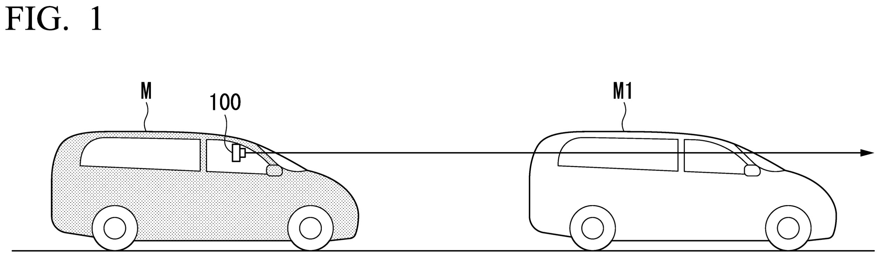

FIG. 1 is a diagram illustrating an example of a usage environment of the terminal device 100 mounted in a host vehicle M. The host vehicle M is, for example, a two-wheeled, three-wheeled, or four-wheeled vehicle or the like, and the driving source thereof is an internal-combustion engine such as a diesel engine or a gasoline engine, an electric motor, or a combination thereof. The electric motor operates using power generated by a generator connected to an internal-combustion engine or discharging power of a secondary battery or a fuel cell.

As shown in FIG. 1, the terminal device 100 is installed in the host vehicle M so as to be able to capture an image of the area ahead in traveling direction of the host vehicle M. The terminal device 100 is held by, for example, an in-vehicle holder (not shown) attached to the dashboard of the host vehicle M, and captures an image of the area in front of the host vehicle M. As will be described later, a user of the terminal device 100 aligns the terminal device 100 at a predetermined height in accordance with the guide line displayed on a display unit 20. FIG. 1 shows a state in which, as a result of the terminal device 100 being aligned in position, an image of the vicinity of the upper end of another vehicle M1 relative to the host vehicle M is captured in a substantially horizontal direction with respect to the road surface.

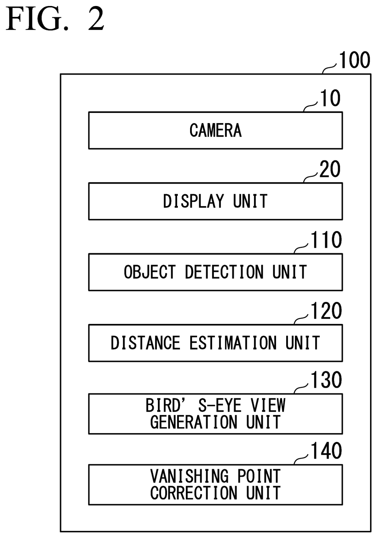

FIG. 2 is a diagram illustrating an example of a configuration of the terminal device 100. As shown in FIG. 2, the terminal device 100 includes, for example, a camera 10, the display unit 20, an object detection unit 110, a distance estimation unit 120, a bird's-eye view generation unit 130, and a vanishing point correction unit 140. The object detection unit 110, the distance estimation unit 120, the bird's-eye view generation unit 130, and the vanishing point correction unit 140 are realized by a hardware processor such as, for example, a central processing unit (CPU) executing a program (software). Some or all of these components may be realized by hardware (a circuit unit; including circuitry) such as a large scale integration (LSI), an application specific integrated circuit (ASIC), a field-programmable gate array (FPGA), or a graphics processing unit (GPU), and may be realized by software and hardware in cooperation. The program may be stored in a storage device such as a hard disk drive (HDD) or a flash memory (a storage device including a non-transitory storage medium) in advance, may be stored in a detachable storage medium such as a DVD or a CD-ROM (non-transitory storage medium), or may be installed by the storage medium being installed in a drive device. In the following description, the functions of the object detection unit 110, the distance estimation unit 120, the bird's-eye view generation unit 130, and the vanishing point correction unit 140 may be collectively referred to as a "bird's-eye view application." The bird's-eye view application is installed in the terminal device 100, and is launched, for example, when the user of the terminal device 100 starts driving the host vehicle M. The camera 10 is a digital camera using a solid-state imaging element such as, for example, a charge coupled device (CCD) or a complementary metal oxide semiconductor (CMOS). The display unit 20 is, for example, a display device such as a touch panel or a liquid crystal display.

### [Estimation of distance]

The object detection unit 110 detects an object reflected in an image captured by the camera 10. More specifically, for example, the object detection unit 110 detects an object using a trained model that has been trained so as to output information such as the presence, position, and type of an object when an image captured by the camera 10 is input. For example, the object detection unit 110 can use this trained model to detect the presence and position of a vehicle and the presence and position of road partition lines.

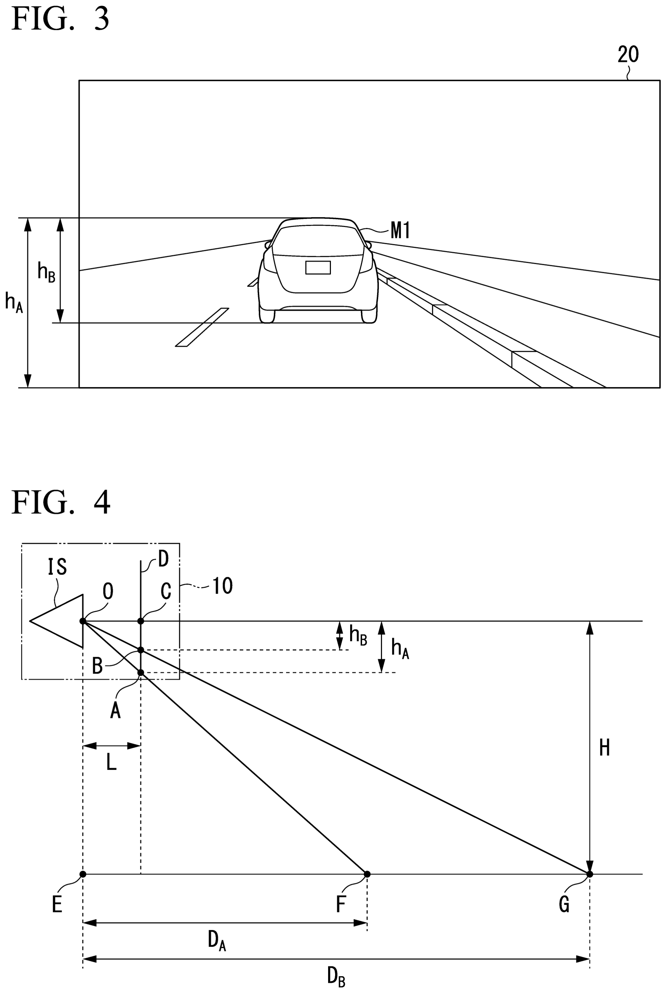

In a case where the object detected by the object detection unit 110 is a vehicle (in this case, the vehicle means a vehicle such as a two-wheeled, three-wheeled, or four-wheeled vehicle), the distance estimation unit 120 estimates the distance between the detected vehicle and the camera 10. FIG. 3 is a diagram illustrating an example of a situation in which the distance estimation unit 120 estimates the distance between the host vehicle M and the other vehicle M1. In FIG. 3, reference sign hA denotes the height from the road position corresponding to the lower end of the display unit 20 to the vanishing point of the image, and reference sign hB denotes the height from the road position corresponding to the lower end of the detected other vehicle M1 to the vanishing point of the image. A method of determining the vanishing point will be described later.

FIG. 4 is a diagram illustrating a method by which the distance estimation unit 120 estimates a longitudinal distance between the host vehicle M and the other vehicle M1. In FIG. 4, reference sign IS denotes an image sensor included in the camera 10, reference sign D denotes a display (the end portion of the camera 10) included in the camera 10, reference sign O denotes the central portion of the image sensor, reference sign A denotes the position on the display D corresponding to the road position F reflected in the bottom of the display D, reference sign B denotes the position on the display D corresponding to the road position G of the rear end portion of the other vehicle M1, reference sign C denotes the intersection point between the imaging direction of the image sensor and the display D, reference sign H denotes the height of the camera 10 with the road surface as a reference, reference sign DA denotes the distance from the position of the image sensor IS to the road position F reflected in the bottom of the display D, and reference sign DB denotes the distance from the position of the image sensor IS to the road position G of the rear end portion of the other vehicle M1.

In FIG. 4, triangle OAC and triangle OEF are similar to each other, and triangle OBC and triangle OEG are similar to each other. That is, since the relations of L:hA=DA:H and L:hB=DB:H are established with respect to distance, these can be transformed to obtain DA=L×H/hA and DB=L×H/hB. Therefore, the distance estimation unit 120 can calculate the distance to the road position G of the rear end portion of the other vehicle M1 using the calculation formula DB=DA×hA/hB. Here, the heights hA and hB to the vanishing point are calculated in advance on the basis of the image captured by the camera 10, and the distance DA, which is independent of the position of the other vehicle M1, can be calculated in advance in accordance with the installation position of the terminal device 100. Meanwhile, the above calculation can be executed using only information on the height of the vanishing point without requiring all of the information on the coordinates of the vanishing point.

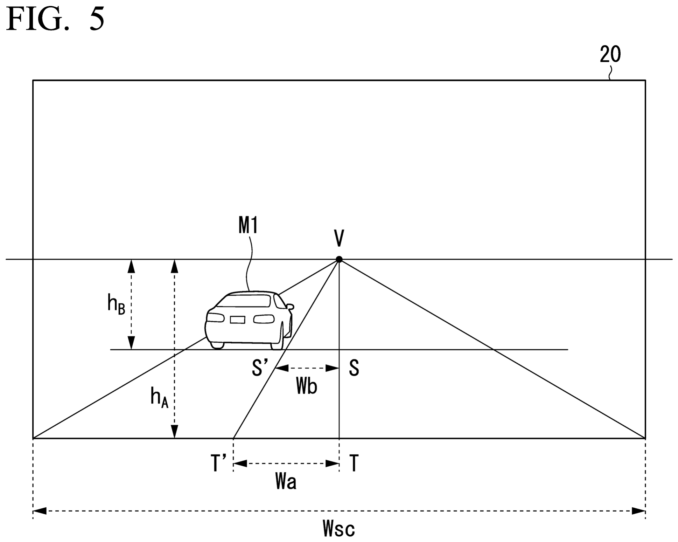

In a case where the object detected by the object detection unit 110 is a vehicle, the distance estimation unit 120 further estimates the lateral distance of the detected vehicle. FIG. 5 is a diagram illustrating a method of estimating the lateral distance of the other vehicle M1 by the distance estimation unit 120. In FIG. 5, reference sign V denotes the vanishing point of the image, reference sign Wb denotes the number of pixels in the horizontal direction with the vanishing point V of the other vehicle M1 as a reference, and reference sign Wa denotes the number of pixels when the number of pixels Wb is moves to the lowermost end of the display D.

In FIG. 5, triangle VT'T and triangle VS'S are similar to each other. That is, since the relation of Wa:hA==Wb:hB is established with respect to distance, it can be transformed to obtain Wa=Wb×hA/hB. Here, assuming that the total number of pixels Wsc at the lower end of the display D and the width Wrd of the road on which the host vehicle M is traveling are known, the distance estimation unit 120 can calculate the actual lateral distance W corresponding to the number of pixels Wa using the calculation formula W=Wrd×Wa/Wsc. As described above, the distance estimation unit 120 calculates the longitudinal distance and lateral distance between the host vehicle M and the other vehicle M1.

### [Generation of bird's-eye view]

The bird's-eye view generation unit 130 generates a bird's-eye view showing the surrounding situation of the host vehicle M on the basis of the longitudinal distance and lateral distance between the host vehicle M and the other vehicle M1 estimated by the distance estimation unit 120. The bird's-eye view generation unit 130 causes the display unit 20 to display the generated bird's-eye view together with the camera image captured by the camera 10.

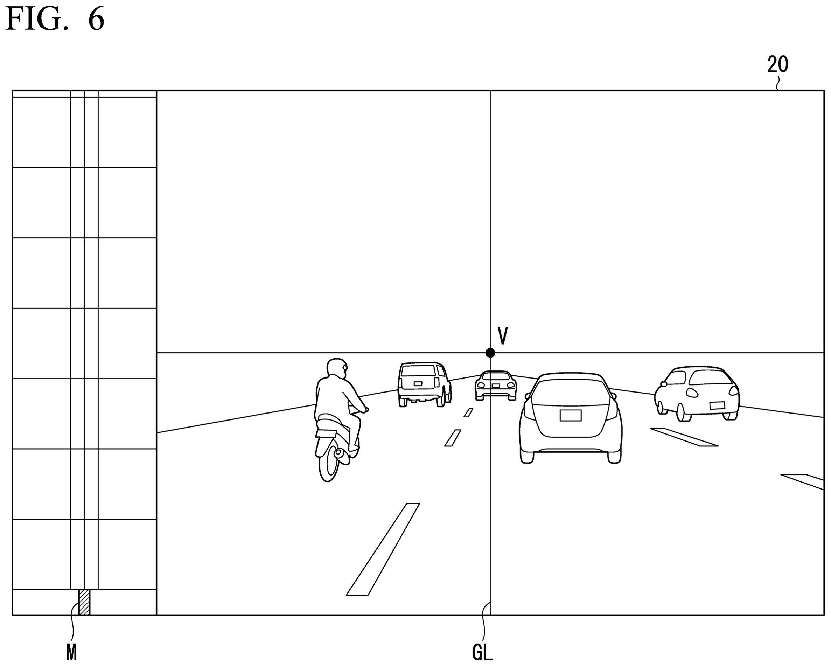

FIG. 6 is a diagram illustrating an example of a bird's-eye view and a camera image which are displayed on the display unit 20. The left part of FIG. 6 shows a bird's-eye view, and the right part of FIG. 6 shows a camera image. In FIG. 6, reference sign GL denotes a guide line that allows the user to set the position of the terminal device 100 when the bird's-eye view application is launched (or when the host vehicle M starts to move). The user installs the terminal device 100 in the vehicle so that the intersection point of the displayed guide lines coincides with the vanishing point V (that is, the point at which the road becomes invisible). The intersection point set at this time is read into the bird's-eye view application as the initial value of the vanishing point V. FIG. 6 shows an example in which only the host vehicle M is displayed on the bird's-eye view immediately after the bird's-eye view application is launched. Alternatively, the bird's-eye view application may automatically set the vanishing point V serving as the intersection point of the guide lines at the center position of the display unit 20.

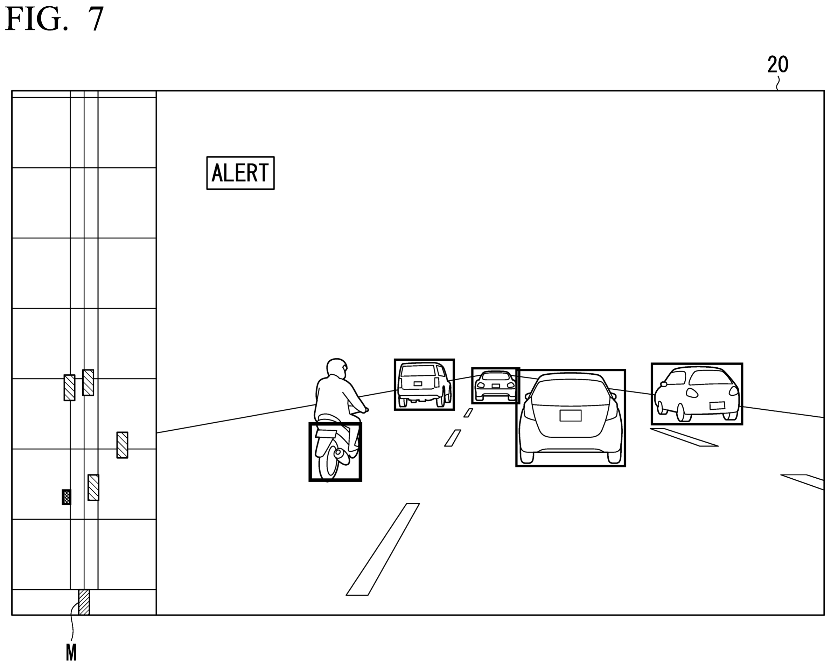

FIG. 7 is a diagram illustrating another example of the bird's-eye view and camera image which are displayed on the display unit 20. FIG. 7 shows an example in which the distance estimation unit 120 estimates the longitudinal distance and lateral distance with the host vehicle M as a reference with respect to four other vehicles and one motorcycle detected by the object detection unit 110, and the bird's-eye view generation unit 130 generates a bird's-eye view on the basis of the estimated distances. As shown in the left part of FIG. 7, the driver of the host vehicle M can refer to the bird's-eye view to more reliably recognize other vehicles in the vicinity of the host vehicle M and to utilize it in his or her own driving.

### [Determination of vanishing point]

As described above, the vanishing point V of the image captured by the camera 10 is utilized to estimate the distance between the host vehicle M and the other vehicle. Immediately after the bird's-eye view application is launched, the vanishing point V is automatically calibrated as the center position of the display unit 20 or is manually determined by the user using guide lines, but once the host vehicle M starts to travel, the vanishing point V of the image may change, for example, depending on the conditions of the road surface. Therefore, in order to accurately estimate the distance between the host vehicle M and the other vehicle and generate a bird's-eye view, it is necessary to accurately determine and correct the vanishing point V. A method of determining and correcting the vanishing point V which is executed by the vanishing point correction unit 140 will be described below.

### [Determination of vertical position of vanishing point]

The vanishing point correction unit 140 sets a bounding box for the other vehicle M1 detected by the object detection unit 110 from the camera image, and determines the vertical position of the vanishing point V as a position located a predetermined length (a predetermined percentage length) below the upper end of the set bounding box. This is because, in the present embodiment, the terminal device 100 including the camera 10 is installed at the top of the front window or rear window of the host vehicle M as shown in FIG. 1, and therefore, it is assumed that the height of the vanishing point corresponds to the height at which the terminal device 100 is installed.

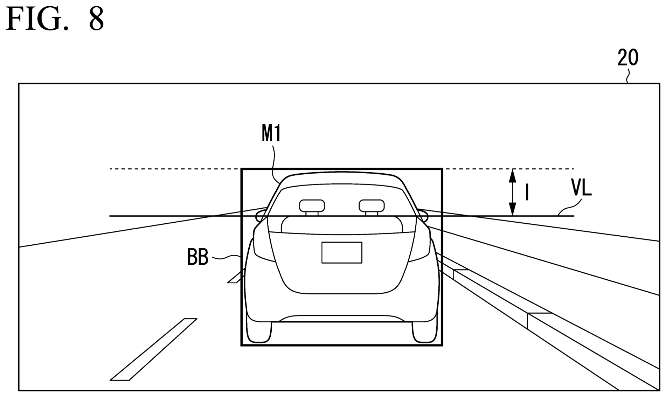

FIG. 8 is a diagram illustrating a method of determining the vertical position of the vanishing point V. As shown in FIG. 8, the vanishing point correction unit 140 sets a bounding box BB surrounding the detected other vehicle M1, and determines the vertical position VL of the vanishing point V as a position located a predetermined length 1 below the upper end of the set bounding box BB. In a case where a plurality of other vehicles M1 are detected from the camera image, the vanishing point correction unit 140 selects the other vehicle M1 which is closest to the host vehicle M as a target vehicle for setting the vertical position VL of the vanishing point V. Meanwhile, the vanishing point correction unit 140 may change the predetermined length 1 depending on whether the host vehicle M in which the terminal device 100 is installed is a two-wheeled vehicle or a four-wheeled vehicle. In this way, the vertical position of the vanishing point V is determined.

### [Determination of horizontal position of vanishing point]

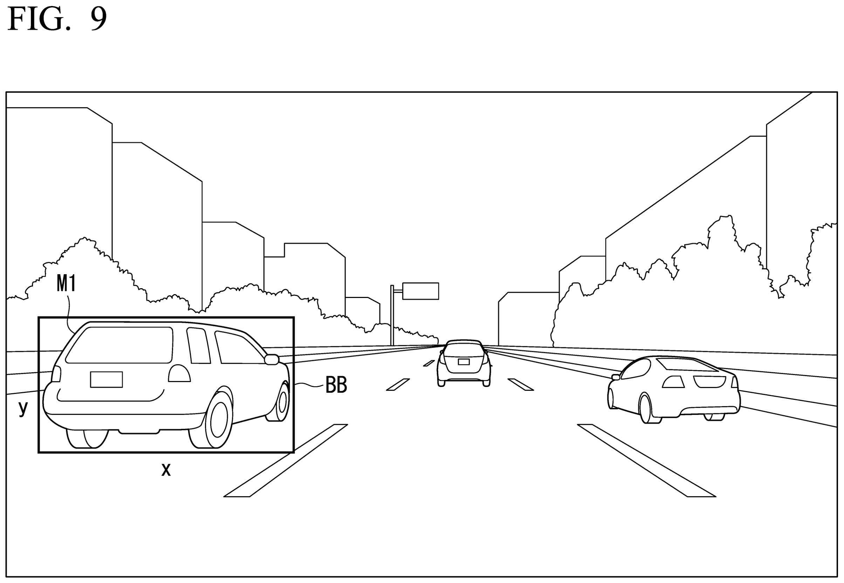

On the other hand, for the horizontal position of the vanishing point, the vanishing point correction unit 140 corrects the horizontal position of the vanishing point V on the basis of the result of comparison between the width (actual measurement value) of the bounding box BB of the detected other vehicle M1 and the width (estimation value) of the other vehicle M1 estimated using the vanishing point VP determined previously. FIG. 9 is a diagram illustrating an example of a situation in which the vanishing point correction unit 140 corrects the horizontal position of the vanishing point V. FIG. 9 shows a case, as an example, where the other vehicle M1 is detected in the lane to the left of the lane in which the host vehicle M is traveling. In FIG. 9, x represents the width of the bounding box BB, and y represents the height of the bounding box BB.

As shown in FIG. 9, in a case where the other vehicle M1 traveling in either the leftward or rightward direction relative to the host vehicle M is detected, the vanishing point correction unit 140 executes horizontal position correction of the vanishing point V which will be described below. The expression "a case where the other vehicle M1 traveling in either the leftward or rightward direction relative to the host vehicle M is detected" may refer, for example, to a case where the other vehicle M1 is detected as traveling in a lane different from the lane in which the host vehicle M is traveling, or a case where the lateral distance from the host vehicle M estimated on the basis of the camera image is detected as being greater than or equal to a predetermined distance.

Further, in a case where the distance between the host vehicle M and the same other vehicle M1 detected in a time series is decreasing (in other words, in a case where the length of the relative coordinates of the other vehicle M1 with the host vehicle M as a reference is decreasing), the vanishing point correction unit 140 executes the horizontal position correction of the vanishing point V which will be described below. This is because the horizontal position correction of the vanishing point V which will be described below is effective in a case where the host vehicle M and the other vehicle M1 are not too far apart from each other. Therefore, alternatively, the vanishing point correction unit 140 may perform the correction to be described below in a case where the distance between the host vehicle M and the other vehicle M1 is equal to or less than a threshold. In addition, for example, the vanishing point correction unit 140 may perform the correction to be described below in a case where the lateral side of the other vehicle M1 is recognized as having an area equal to or greater than a predetermined size.

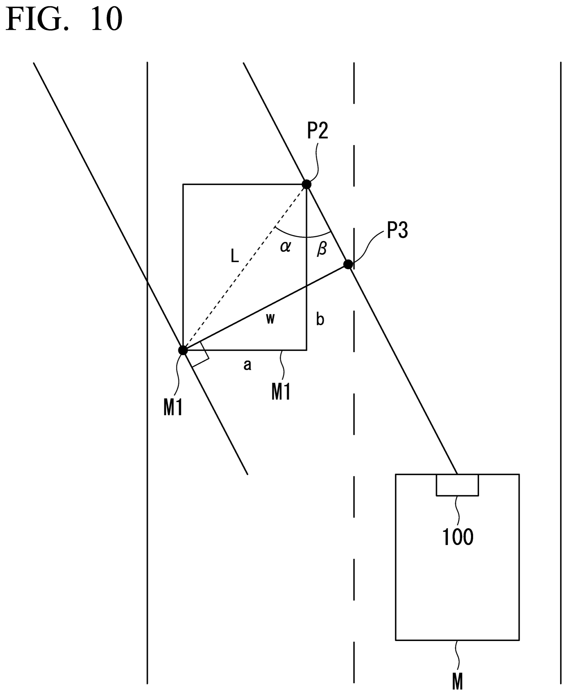

FIG. 10 is a diagram illustrating a method of correcting the horizontal position of the vanishing point V by the vanishing point correction unit 140. FIG. 10 shows a bird's-eye view obtained by the bird's-eye view generation unit 130 performing bird's-eye view conversion on the image shown in FIG. 9 using the vanishing point VP determined previously. That is, the vanishing point correction unit 140 estimates the width of the other vehicle M1 from the bird's-eye view obtained using the vanishing point VP determined previously, verifies the vanishing point VP determined previously by comparing it with the width of the other vehicle M1 actually measured from the bounding box BB, and corrects the horizontal position of the vanishing point VP in accordance with the comparison result.

In FIG. 10, the angle α represents the angle of the diagonal line P1-P2 of the other vehicle M1, formed as a rectangle on the bird's-eye view, relative to the lane, and the angle β represents the angle relative to the other vehicle M1 when the other vehicle M1 is viewed from the host vehicle M. Further, the length a represents the vehicle width of the other vehicle M1, and the length b represents the vehicle length of the other vehicle M1, which are set as the average vehicle width and vehicle length of the vehicle, respectively.

In this case, the vanishing point correction unit 140 can calculate the angles α and β as α=arctan(a/b) and β=arctan(x/y), respectively. The vanishing point correction unit 140 can estimate the width w of the other vehicle M1 as w=Lsin(α+β)=√(a2+b2sin(α+β) using the above values. That is, the estimated width w represents the width of the other vehicle M1 estimated based on the vanishing point VP determined previously.

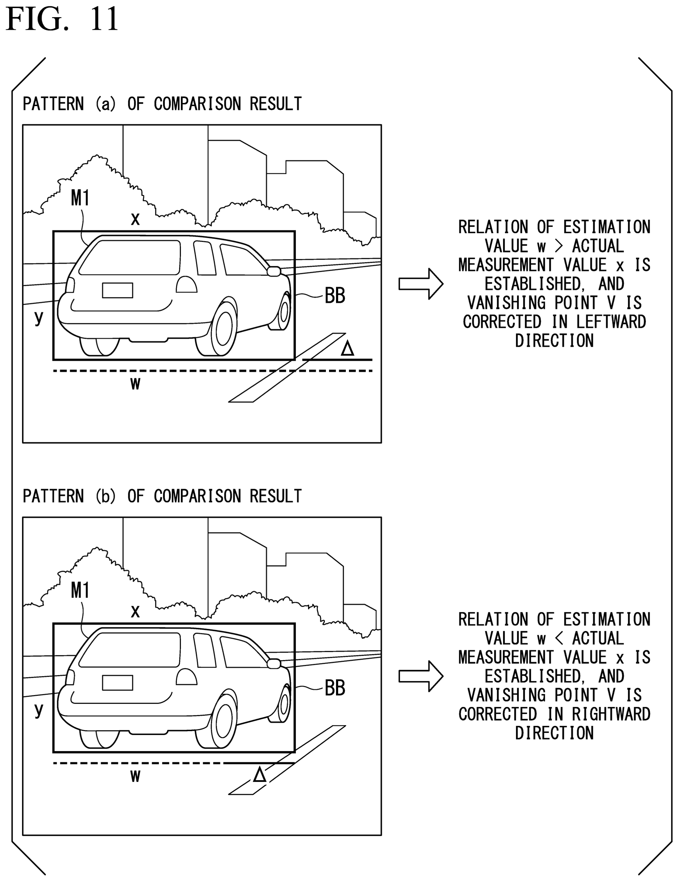

Next, the vanishing point correction unit 140 compares the estimated width w of the other vehicle M1 with the width x of the bounding box BB actually measured from the camera image, and corrects the horizontal position of the vanishing point VP in accordance with the comparison result. FIG. 11 is another diagram illustrating the method of correcting the horizontal position of the vanishing point V by the vanishing point correction unit 140. A pattern (a) of the comparison result shown in FIG. 11 represents a case where the estimation width w of the other vehicle M1 is larger than the actual measurement width x (that is, w=x+Δ), and a pattern (b) of the comparison result shown in FIG. 11 represents a case where the estimation width w is smaller than the actual measurement width x of the other vehicle M1 (that is, x=w+Δ).

As shown in the pattern (a), in a case where the estimation width w of the other vehicle M1 is larger than the actual measurement width x, this means that the other vehicle M1 is actually facing more to the left than estimated. That is, since the vanishing point VP used to generate the bird's-eye view is to be located further to the left, the vanishing point correction unit 140 corrects the vanishing point VP in the leftward direction from the vanishing point VP determined previously. On the other hand, as shown in the pattern (b), in a case where the estimation width w of the other vehicle M1 is smaller than the actual measurement width x, this means that the other vehicle M1 is actually facing more to the right than estimated. That is, since the vanishing point VP used to generate the bird's-eye view is to be located further to the right, the vanishing point correction unit 140 corrects the vanishing point VP in the rightward direction from the vanishing point VP determined previously.

The vanishing point correction unit 140 repeats the determination of the vertical position of the vanishing point VP and the correction of horizontal position thereof described above in a predetermined control cycle (for example, every few seconds). Such determination and correction of the vanishing point according to the present embodiment do not require communication with an external server or the like, and do not also require complex calculations associated with the use of a trained model or the like. This makes it possible to obtain the vanishing point with a high degree of accuracy while keeping calculation costs and battery consumption low. Particularly, in the present embodiment, the terminal device 100 is a terminal such as a smartphone which is held by a user, and thus convenience for the user can be improved by keeping the calculation cost and battery consumption low.

Meanwhile, in the description of FIGS. 9 to 11, an example in which the other vehicle M1 is traveling ahead of the host vehicle M on the left side has been described, but even in a case where the other vehicle M1 is traveling ahead of the host vehicle M on the right side, the vanishing point correction unit 140 can correct the horizontal position of the vanishing point VP in the same way. More specifically, in a case where estimation width w of the other vehicle M1 traveling ahead of the host vehicle M on the right side is larger than the actual measurement width x, the vanishing point correction unit 140 interprets as this indicating that the other vehicle M1 is actually facing more to the right than estimated. Therefore, the vanishing point correction unit 140 corrects the vanishing point VP in the rightward direction from the vanishing point VP determined previously. In a case where the estimation width w of the other vehicle M1 is smaller than the actual measurement width x, this means that the other vehicle M1 is actually facing more to the left than estimated. Therefore, the vanishing point correction unit 140 corrects the vanishing point VP in the leftward direction from the vanishing point VP determined previously.

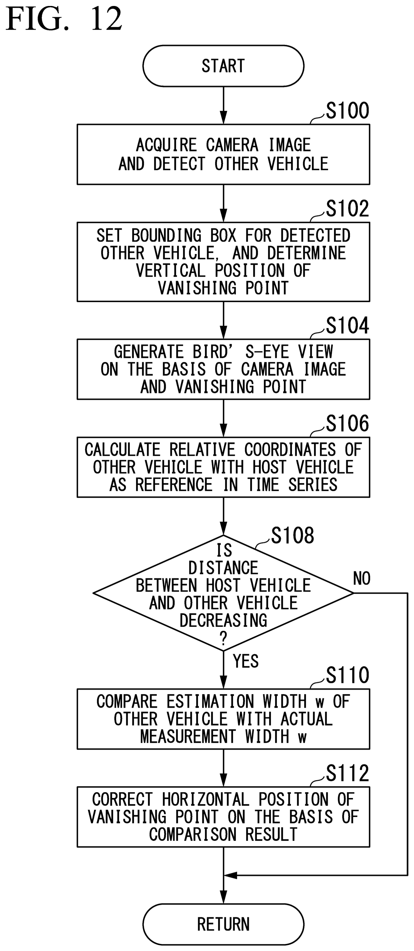

Next, a flow of processing executed by the terminal device 100 will be described with reference to FIG. 12. FIG. 12 is a flowchart illustrating an example of a flow of processing executed by the terminal device 100. The processing of the flowchart shown in FIG. 12 is executed, for example, in a predetermined control cycle while the host vehicle M is traveling. The processing of the flowchart shown in FIG. 12 is performed on the premise that the terminal device 100 has been started up and that the initial value of the vanishing point VP has been calibrated.

First, the terminal device 100 acquires a camera image captured by the camera 10 and detects another vehicle (step S100). Next, the terminal device 100 sets a bounding box for the detected other vehicle, and sets the vertical position of the vanishing point as a position located a predetermined length below the upper end of the set bounding box (step S102). Next, the terminal device 100 generates a bird's-eye view on the basis of the camera image and the vanishing point (step S104).

Next, the terminal device 100 calculates the relative coordinates of the other vehicle with the host vehicle as a reference on the bird's-eye view in a time series (step S106). Next, the terminal device 100 determines whether the distance between the host vehicle M and the other vehicle is decreasing on the basis of the relative coordinates calculated in a time series (step S108). In a case where it is determined that the distance between the host vehicle M and the other vehicle has not decreased, the terminal device 100 ends the processing of the flowchart. In this case, a vanishing point of which only the vertical position has been corrected is obtained.

On the other hand, in a case where it is determined that the distance between the host vehicle and the other vehicle is decreasing, the terminal device 100 compares the estimation width w of the other vehicle calculated on the bird's-eye view with the actual measurement width w of the bounding box set for the other vehicle (step S110). Next, the terminal device 100 corrects the horizontal position of the vanishing point on the basis of the result of comparison between the estimated width w and the actual measurement width w (step S112). This ends the processing of this flowchart.

Meanwhile, in step S108 of the above flowchart, the terminal device 100 determines whether the distance between the host vehicle M and the other vehicle is decreasing on the basis of the relative coordinates calculated in a time series. However, the present invention is not limited to such a configuration, and the terminal device 100 may determine in step S108 whether the distance between the host vehicle M and the other vehicle M1 is equal to or less than a threshold.

According to the present embodiment described above, another vehicle present in an image captured by a camera mounted in the host vehicle is detected, and the horizontal position of the vanishing point is corrected on the basis of the result of comparison between a first width which is the actual measurement value of the bounding box of the detected other vehicle and a second width which is the estimation value of the width of the other vehicle estimated using the previously vanishing point. This makes it possible to obtain the vanishing point with a high degree of accuracy while keeping calculation costs and battery consumption low.

The above-described embodiment can be represented as follows.

An image processing device including:
a storage medium having computer-readable instructions stored therein; and
a processor connected to the storage medium,
wherein the processor executes the computer-readable instructions to
detect another vehicle present in an image captured by an image sensor mounted in a host vehicle, and
correct a vanishing point of the image, and
the correction involves correcting the vanishing point on the basis of a result of comparison between a first width of the detected other vehicle and a second width of the other vehicle estimated using the vanishing point.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### REFERENCE SIGNS LIST

10 Camera
20 Display unit
110 Object detection unit
120 Distance estimation unit
130 Bird's-eye view generation unit
140 Vanishing point correction unit

## Claims

1. An image processing device comprising:
a detection unit that detects another vehicle present in an image captured by an image sensor mounted in a host vehicle; and
a correction unit that corrects a vanishing point of the image,
wherein the correction unit corrects the vanishing point on the basis of a result of comparison between a first width of the detected other vehicle and a second width of the other vehicle estimated using the vanishing point.

2. The image processing device according to claim 1, wherein, in a case where the first width of the other vehicle traveling in either a leftward or rightward direction relative to the host vehicle is smaller than the second width, the correction unit corrects the vanishing point in the direction.

3. The image processing device according to claim 1, wherein, in a case where the first width of the other vehicle traveling in either a leftward or rightward direction relative to the host vehicle is larger than the second width, the correction unit corrects the vanishing point in a direction opposite to the direction.

4. The image processing device according to claim 2 or 3, wherein the correction unit performs the correction in a case where a distance between the host vehicle and the same other vehicle detected in a time series is decreasing.

5. The image processing device according to claim 2 or 3, wherein the correction unit performs the correction in a case where a distance between the host vehicle and the other vehicle is equal to or less than a threshold.

6. An image processing method comprising causing a computer to:
detect another vehicle present in an image captured by an image sensor mounted in a host vehicle; and
correct a vanishing point of the image,
wherein the correction involves correcting the vanishing point on the basis of a result of comparison between a first width of the detected other vehicle and a second width of the other vehicle estimated using the vanishing point.

7. A program causing a computer to:
detect another vehicle present in an image captured by an image sensor mounted in a host vehicle; and
correct a vanishing point of the image,
wherein the correction involves correcting the vanishing point on the basis of a result of comparison between a first width of the detected other vehicle and a second width of the other vehicle estimated using the vanishing point.
